# EUROPEAN PATENT APPLICATION

(11) **EP 2 128 879 A2**
(43) Date of publication of application: **02.12.2009**
(21) Application number: 09160502.2
(22) Date of filing: 18.05.2009
(51) Int. Cl.: H01G 9/155, H01M 12/00

(54) **Expandable energy storage for portable electronic devices**

(30) Priority: 29.05.2008 US 128924
(71) Applicant: Northern Lights Semiconductor Corp., Saint Paul, MN 55113 (US)
(72) Inventor: Lai, James Chyi, Saint Paul,, MN MN55113 (US); Fong, Kai Chun, Saint Paul,, MN MN55113 (US)
(74) Representative: Becker, Eberhard

(57) **Abstract**

An expandable energy storage for portable electronic devices is disclosed. The expandable energy storage includes magnetic-capacitor (MCAP) energy storage sticks (110,120,130,140) and a controller (160). The MCAP energy storage sticks (110,120,130,140) are arranged in parallel and provide electrical power to a portable electronic device. Each MCAP energy storage stick has a positive terminal, a negative terminal, and a controlling terminal for coupling with the portable electronic device. The controller couples the controlling terminals of the MCAP energy storage sticks to a system data terminal (182).

## Description

### BACKGROUND

### Field of Invention

The present invention relates to expandable energy storage for portable electronic devices. More particularly, the present invention relates to expandable energy storage for portable electronic devices with magnetic-capacitor (MCAP) sticks.

### Description of Related Art

Portable electronic devices such as mobile phones and mp3 players have become increasingly common devices used by individuals to permit communication with others, to play audio or video files, and so forth. Most portable electronic devices are typically powered by chemical based batteries with a single power supply (single battery architecture). Newer "hybrid" architectures utilize a chemical based battery as the central power supply and ultra-capacitors or super-capacitors to supply peak power over a very short time (battery-ultracapacitor hybrid architecture). There are also battery-based architectures that use multiple batteries (multiple batteries architecture).

However, many problems are associated with these architectures. In single battery architecture, the battery must be sized to support both peak power draw and continuous energy draw. As a result, the battery is often very bulky and not optimized for continuous operations. Large gauge wires are required to run between the battery and the high power draw subsystems, thus adding weight and bulk.

An architecture with multiple batteries has different size batteries to support different subsystem loads. While it improves the efficiency and redundancy over single battery architecture, it adds bulk and weight to the system. Complex circuitries are required to handle charge equalization among all batteries, so the weakest battery does not limit the performance of the multiple-battery system. This problem is compounded by the use of batteries with different chemistries and charge and discharge profiles to better meet subsystem needs.

In the battery-ultracapacitor hybrid architecture, ultra-capacitors are used to handle only occasional peak loads. The battery is still the primary energy storage for the system. As a result, the system response and system weight are not greatly improved. Furthermore, complex circuitries are required to maintain charge equalization in the ultra-capacitor banks, adding the weight and power management overheads.

All of these architectures are limited by the power/energy/weight/size characteristics of batteries. For the foregoing reasons, there is a need to provide new energy storage architecture for portable electronic devices.

### SUMMARY

The present invention is directed to an expandable energy storage for portable electronic devices using magnetic-capacitor (MCAP) energy storage sticks. The present invention provides a longer period of operation than traditional systems and reduces the weight and physical size of portable electronic devices.

To achieve the foregoing objectives, and in accordance with the purpose of the present invention as broadly described herein, the present invention provides an expandable energy storage for portable electronic devices that includes magnetic-capacitor (MCAP) energy storage sticks and a controller. The MCAP energy storage sticks are arranged in parallel and provide electrical power to a portable electronic device. Each of the MCAP energy storage sticks has a positive terminal, a negative terminal, and a controlling terminal for coupling with the portable electronic device. The controller couples the controlling terminals of the MCAP energy storage sticks to a system data terminal.

It is to be understood that both the foregoing general description and the following detailed description are by examples, and are intended to provide further explanation of the invention as claimed.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention. In the drawings,
Fig. 1 shows a schematic view of stacked MCAP sticks in a housing/slot according to one preferred embodiment of this invention;
Fig. 2 is a view of a MCAP energy storage stick indicating the dimensions according to one preferred embodiment of this invention;
Fig. 3 is a system diagram showing the MCAPs and controller according to one preferred embodiment of this invention;
Fig. 4 is a system circuit diagram according to one preferred embodiment of this invention;
Fig. 5 illustrates a way of packaging the expandable energy storage according to one preferred embodiment of this invention;
Fig. 6 is a system diagram according to another preferred embodiment of this invention;
Fig. 7 illustrates the first way of packaging the expandable energy storage in an existing battery format with a single battery slot;
Fig. 8 illustrates the second way of packaging the expandable energy storage in an existing battery format with a multiple battery slot; and
Fig. 9 illustrates the third way of packaging the expandable energy storage with Li-ion prismatic and Li-Polymer battery formats.

### DESCRIPTION OF THE PREFERRED EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

All figures are drawn for ease of explanation of the basic teachings of the present invention only; the extensions of the figures with respect to number, position, relationship, and dimensions of the parts to form the embodiment will be explained or will be within the skill of the art after the following description has been read and understood.

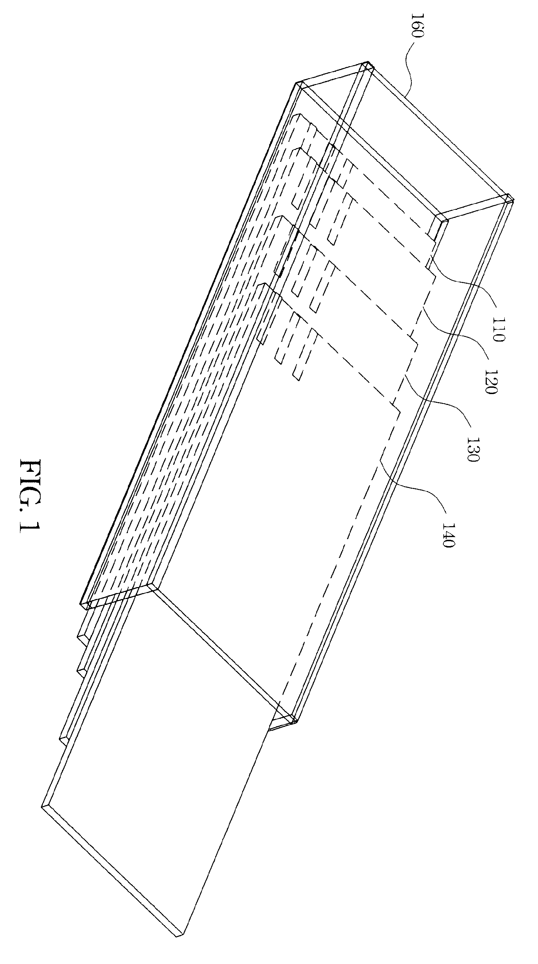

Fig. 1 shows a schematic view of stacked MCAP sticks in a housing/slot according to one preferred embodiment of this invention. An expandable energy storage for portable electronic devices includes a plurality of magnetic-capacitor (MCAP) energy storage sticks. This figure uses MCAP energy storage sticks 110, 120, 130, and 140 for illustration. Housing 160 holds the MCAP sticks 110, 120, 130, and 140. According to the system requirements of portable electronic devices, various numbers and sizes of MCAP energy storage sticks can be stacked up to provide efficient electrical power.

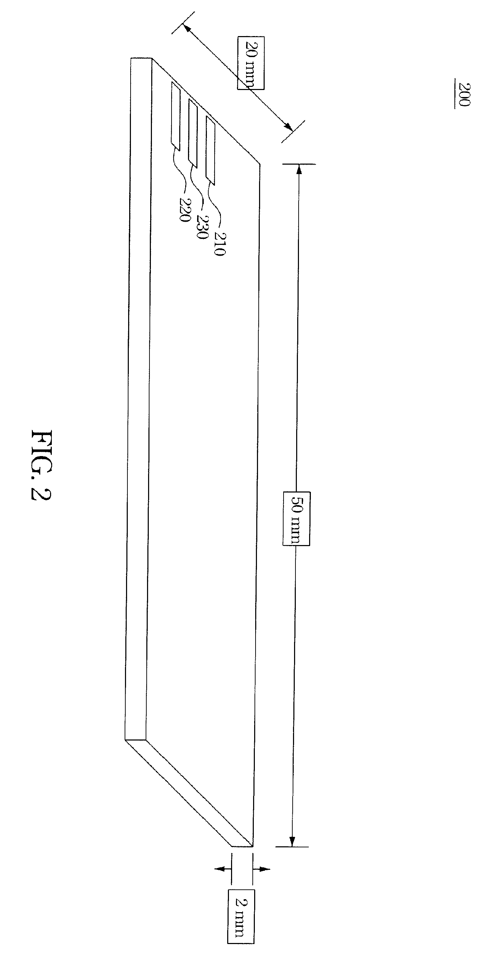

Fig. 2 is a view of a MCAP energy storage stick indicating the dimensions according to one preferred embodiment of this invention. Each of the MCAP sticks shown in Fig. 1 has the same dimensions as the MCAP energy storage stick 200. The MCAP energy storage stick 200 has a length of 50 mm, a width of 20 mm, and a thickness of 2 mm. The MCAP energy storage stick 200 also has a positive terminal 210, a negative terminal 220, and a controlling terminal 230 to couple with a portable electronic device. The MCAP energy storage stick 200 includes a plurality of magnetic capacitors and provides a higher amount of energy to an electronic device at a lower weight and bulk compared with conventional batteries.

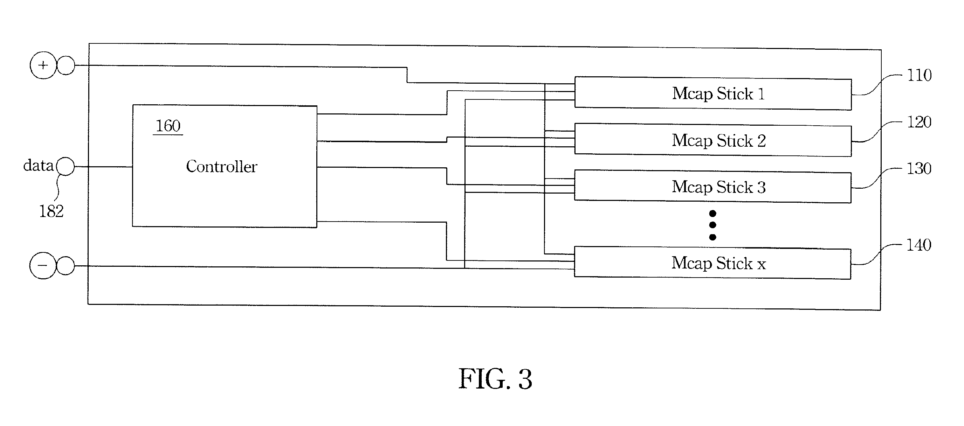

Fig. 3 is a system diagram showing the MCAP energy storage sticks and controller according to one preferred embodiment of this invention. The expandable energy storage system includes a plurality of MCAP energy storage sticks 110, 120, 130, and 140 and a controller 160. The MCAP energy storage sticks 110, 120, 130, and 140 are arranged in parallel and provide electrical power to a portable electronic device. Each of the MCAP energy storage sticks has a positive terminal, a negative terminal, and a controlling terminal. The controller 160 couples the controlling terminals of the MCAP energy storage sticks to a system data terminal 182. The controller 160 sends the status of each the MCAP energy storage sticks to the system data terminal 182 for monitoring power levels and adjusting the portable electronic device accordingly. For example, a battery status indication might include an indication of talk time and standby time utilized since the last time the MCAP energy storage sticks were charged, or an indication of the remaining talk time and standby time available before the MCAP energy storage sticks become discharged. So, the system needs to know the status of MCAP energy storage sticks to perform the battery status indication function, and this information is sent via the system data terminal 182 by the controller 160.

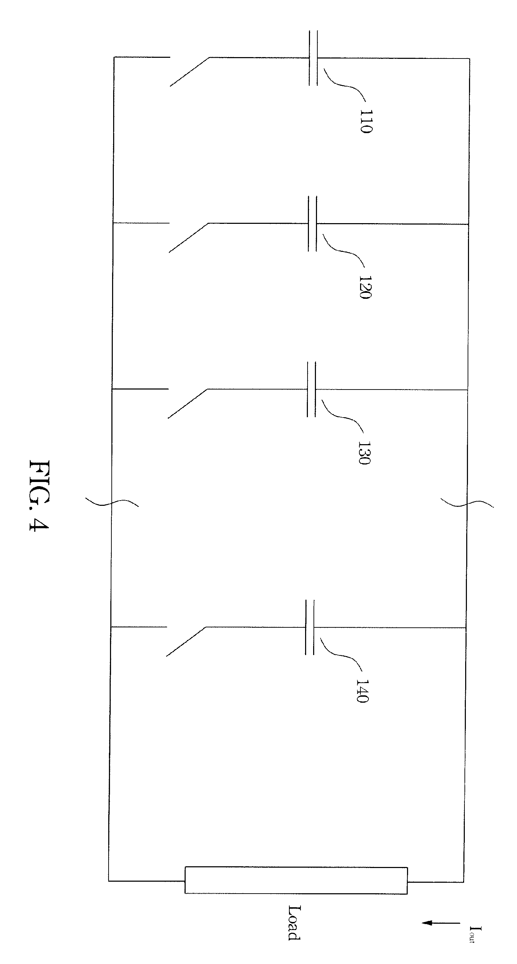

Fig. 4 is a system circuit diagram according to one preferred embodiment of this invention. The MCAP energy storage sticks 110, 120, 130, and 140 are arranged in parallel and provide electrical power to a load. The system circuit further includes a plurality of switches coupled to the MCAP energy storage sticks respectively. Depending on the requirements of the load, the switches for each of the MCAP energy storage sticks can be selectively turned on or turned off accordingly. Moreover, depending on the system design, MCAP energy storage sticks may be charged while being discharging.

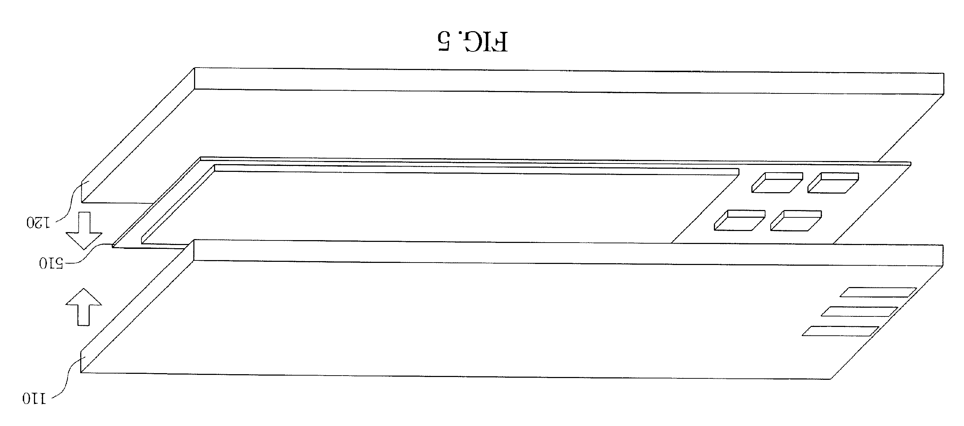

Fig. 5 illustrates a way of packaging the expandable energy storage according to one preferred embodiment of this invention. The MCAP energy storage sticks 110 and 120 can be packaged with system data 510 configured in between. The package of the MCAP energy storage sticks will have a positive terminal, a negative terminal, and a controlling terminal to the outside for wiring.

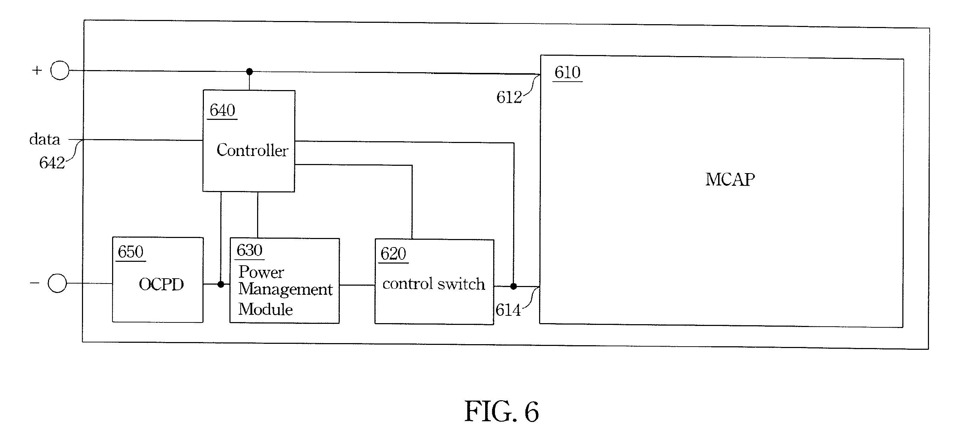

Fig. 6 is a system diagram according to another preferred embodiment of this invention. An expandable energy storage for portable electronic devices includes a magnetic-capacitor (MCAP) energy storage stick 610, a control switch 620, a power management module 630, a controller 640, and an over current protection device (OCPD) 650. The MCAP energy storage stick 610 includes a plurality of magnetic capacitors. The over current protection device (OCPD) 650 can be a resettable fuse. The MCAP energy storage stick 610 provides electrical power to a portable electronic device and has a positive terminal 612 and a negative terminal 614. The control switch 620 is coupled to the negative terminal 614 of the MCAP energy storage stick 610. The power management module 630 is coupled with the control switch 620. The over current protection device (OCPD) 650 is coupled with the power management module 630 and the negative terminal connecting with a portable electronic device to protect the device from excessive currents of voltages. The controller 640 couples the MCAP energy storage stick 610, the control switch 620, the power management module 630, and the OCPD 650 to a system data terminal 642. The controller 640 receives signals from the MCAP energy storage stick 610, the control switch 620, the power management module 630, and the over current protection device (OCPD) 650 and sends the status information to the system data terminal 642 to monitor power levels and adjust the portable electronic device accordingly. For example, a battery status indication might include an indication of talk time and standby time utilized since the last time the MCAP energy storage sticks were charged, or an indication of the remaining talk time and standby time available before the MCAP energy storage sticks become discharged. So, the system needs to know the status information to perform the battery status indication function, and this information is sent via the system data terminal 642 by the controller 640.

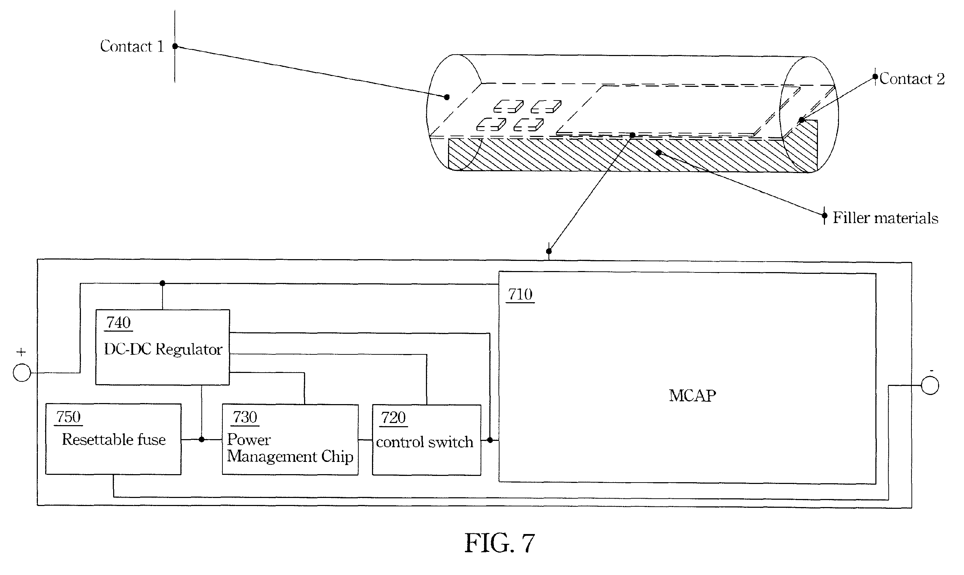

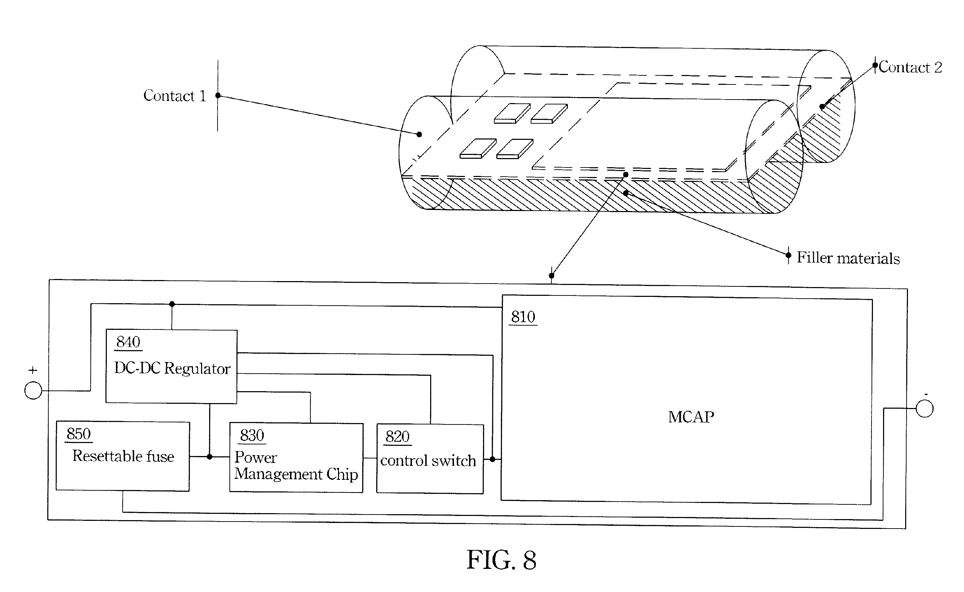

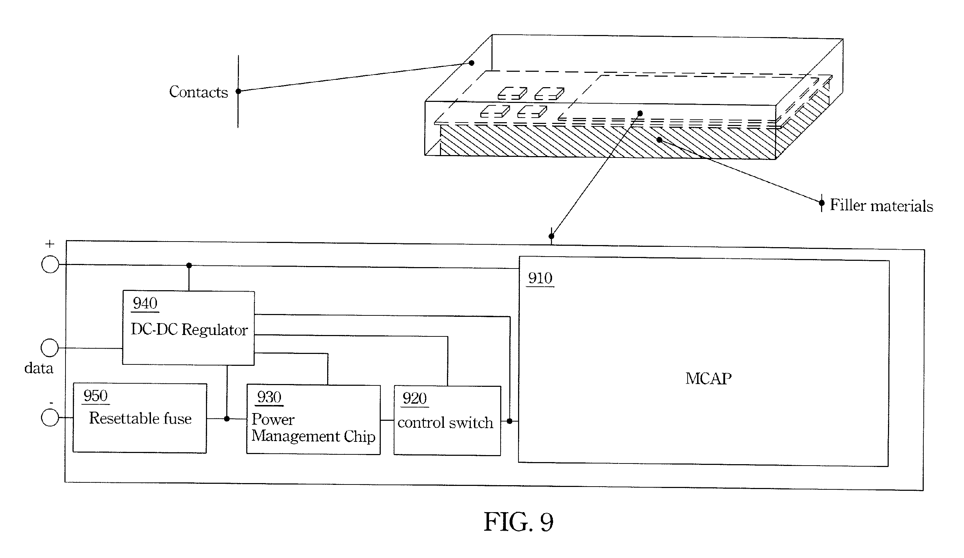

To utilize MCAP in general electronic devices might require a radical redesign of the system. However, in most instances, such a redesign and retrofit is neither technically nor economically viable. Since a large portion of portable electronic devices, such as electric toys and mp3 players, are designed with existing battery formats like AA, AAA, C, D, Li-ion prismatic, Li-ion cylindrical, and Li-Polymer, the expandable MCAP energy storage can be packaged with physical form factors of standard battery formats. Fig. 7 illustrates the first way of packaging the expandable energy storage in an existing battery format with a single battery slot. This package conforms with battery formats AA, AAA, C, and D. The MCAP energy storage includes a magnetic-capacitor (MCAP) energy storage stick 710, a control switch 720, a power management chip 730, a DC-DC regulator 740, and a resettable fuse 750. The MCAP battery has a positive terminal 712 as a first contact and a negative terminal 714 as a second contact with the slot. Filler materials are used to fill up the space. Similarly, fig. 8 illustrates the second way of packaging the expandable energy storage in an existing battery format with a multiple battery slot. Fig. 9 illustrates the third way of packaging the expandable energy storage with Li-ion prismatic and Li-Polymer battery formats. Placing MCAP batteries in place of standard batteries (primary and secondary) increases the operation duration and overall energy and power storage efficiency of the system.

In conclusion, this invention demonstrates the utilization of the magnetic capacitor (a new energy storage technology). This technology increases the energy storing capability more than 1 billion times compared with conventional capacitors, within the same volume and weight. Utilizing this technology rather than the standard used technology would bring much greater efficiency to portable electronic devices such as mobile phones, laptops, mp3 players, and PDAs (personal digital assistants).

As embodied and broadly described herein, the embodiments effectively provide a longer period of operation than traditional systems and easy addition of external MCAP energy storage. Besides, the embodiments reduce the weight and physical size of electronic systems.

Although the present invention has been described in considerable detail with reference to certain preferred embodiments thereof, other embodiments are possible. Therefore, the spirit and scope of the appended claims should not be limited to the description of the preferred embodiments contained herein.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. An expandable energy storage for portable electronic devices comprising:
a plurality of magnetic-capacitor (MCAP) energy storage sticks arranged in parallel and providing electrical power to a portable electronic device, wherein each of the MCAP energy storage sticks having a positive terminal, a negative terminal, and a controlling terminal for coupling with the portable electronic device; and
a controller coupling the controlling terminals of the MCAP energy storage sticks to a system data terminal.

2. The expandable energy storage of claim 1, further comprising a plurality of switches coupled to the MCAP energy storage sticks respectively.

3. The expandable energy storage of claim 1, wherein each of the MCAP energy storage sticks comprises a plurality of magnetic capacitors.

4. The expandable energy storage of claim 1, wherein the controller sends the status of the MCAP energy storage sticks to the system data terminal for monitoring power levels and adjusting the portable electronic device accordingly.

5. The expandable energy storage of claim 1, wherein the MCAP energy storage sticks are packaged with system data configured in between.

6. The expandable energy storage of claim 1, wherein each of the MCAP energy storage sticks has a length of 50mm, a width of 20mm, and a thickness of 2mm.

7. An expandable energy storage for portable electronic devices comprising:
a magnetic-capacitor (MCAP) energy storage stick providing electrical power to a portable electronic device and having a positive terminal and a negative terminal;
a control switch coupled to the negative terminal of the MCAP energy storage stick;
a power management module coupled with the control switch;
an over current protection device (OCPD) coupled with the power management module and protecting the portable electronic device from excessive currents of voltages; and
a controller coupling the MCAP energy storage stick, the control switch, the power management module, and the OCPD to a system data terminal.

8. The expandable energy storage of claim 7, wherein the MCAP energy storage stick comprises a plurality of magnetic capacitors.

9. The expandable energy storage of claim 7, wherein the controller sends the status of the MCAP energy storage stick to the system data terminal for monitoring power levels and adjusting the portable electronic device accordingly.

10. The expandable energy storage of claim 7, wherein the over current protection device is a resettable fuse.

11. The expandable energy storage of claim 7, wherein the expandable energy storage for portable electronic devices is packaged with physical form factors of standard battery formats comprising AA, AAA, C, and D.
